Europäisches Patentamt

**European Patent Office**

Office européen des brevets

(11) Publication number: **0 129 246**
**B1**

(12) **EUROPEAN PATENT SPECIFICATION**

(45) Date of publication of patent specification: **09.09.87**

(51) Int. Cl.⁴: **B 21 D 5/14, B 21 D 53/10**

(21) Application number: **84107014.7**

(22) Date of filing: **19.06.84**

(54) Method of production of cylindrical body.

(30) Priority: **20.06.83 JP 109142/83**

(43) Date of publication of application:
**27.12.84 Bulletin 84/52**

(45) Publication of the grant of the patent:
**09.09.87 Bulletin 87/37**

(84) Designated Contracting States:
**CH DE FR GB IT LI NL SE**

(56) References cited:
**DE-A-1 552 120**
**DE-A-2 504 505**
**DE-A-2 818 378**
**US-A-2 762 118**
**US-A-3 594 599**
**US-A-4 122 701**

(73) Proprietor: **HITACHI, LTD.**
**6, Kanda Surugadai 4-chome Chiyoda-ku**
**Tokyo 100 (JP)**

(72) Inventor: **Tani, Tatsuhiro**
**3-314, Boda-Apartment House 2593, Takaba**
**Katsuta-shi (JP)**
Inventor: **Nagasawa, Hiroyuki**
**900-12, Nakane**
**Katsuta-shi (JP)**
Inventor: **Kikuchi, Rokuro**
**885-25, Ichige**
**Katsuta-shi (JP)**
Inventor: **Tomite, Tosio**
**2127-16, Tsuda**
**Katsuta-shi (JP)**
Inventor: **Kobayashi, Hidemitsu**
**Sawaryo 467, Tabiko**
**Katsuta-shi (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

EP 0 129 246 B1

Courier Press, Leamington Spa, England.

## Description

This invention relates to a method of production of cylindrical bodies of the kind referred to in the pre-characterizing portion of claim 1. Such a method is known from DE—B—15 52 120. More particularly it is concerned with a method of production of a cylindrical body suitable for use as a yoke of a starter motor or other dynamolectric machines.

A starter motor usually used for starting an internal combustion engine is described, for example, in US Patent No. 3 594 599, in which a yoke in the form of a cylindrical body formed of iron has secured to its inner peripheral surface poles which include permanent magnets and field coils, and an armature core is located adjacent inner peripheral surfaces of the poles. The cylindrical body serving as the yoke has hitherto been produced by one of the following two methods. In one method, a sheet of iron is cut into predetermined lengths which are each rounded into an annular shape and joined by welding at ends abutted against each other to provide cylindrical bodies of a desired size. In the other method, a tubular blank formed of steel is cut into predetermined lengths to provide cylindrical bodies of a desired size. However, these two methods of the prior art are not without disadvantages. The method relying on welding for producing yokes would require a correction of the shape because the cylindrical bodies produced would undergo thermal deformation. Also, the influences of heat might cause a reduction in magnetic characteristics, thereby adversely affecting the performance of the motor. When a tubular steel blank is used as material, a solid-drawn steel pipe is high in cost and the tubular steel blank would have to be prepared specially for the purpose, depending on the dimension of the outer diameter.

To obviate the aforesaid disadvantages of the prior art, proposals have been made to use a method wherein a sheet of metal cut in a predetermined size is formed at opposite sides with a protuberance and a groove which are complementary to each other and subjected to rolling to form same into a cylindrical shape, and the protuberance and groove of the rolled sheet are interfitted to provide a cylindrical body of the desired dimensions. Since the protuberance is merely fitted in the groove when the sheet of metal is formed into a cylindrical shape, it is inevitable that gaps are formed between the protuberance and groove when one is fitted in the other. Formation of the gaps causes an increase in reluctance and has adverse effects on the magnetic characteristics.

From prior art document DE—B—15 52 120 a method of production of a cylindrical body is known according to which metal-stripes are formed which are provided at their opposite sides with portions complementary to each other and adapted to fit one in the other.

These stripes are rolled on a shaft and the complementary portions are fitted one in the other to form a cylindrical blank. With this method it cannot be avoided that gaps between the complementary positions are left after fitting these portions together.

This invention has been developed for the purpose of obviating the aforesaid disadvantages of the prior art. Accordingly, the invention has as its object the provision of a method of production of a cylindrical body which enables the cylindrical body with no gaps at jointed portions to be produced at low cost and with a high degree of productivity from a sheet of metal.

According to the invention this object is solved by a method of production of a cylindrical body of the kind referred to in the pre-characterizing part of the patent claim 1 comprising the features disclosed in the characterizing part of claim 1.

In the following, preferred embodiments of the invention are described with reference to the drawings, in which

Fig. 1 is a perspective view of a cylindrical blank of metal used for providing a cylindrical body;

Fig. 2 is a developed view of the cylindrical blank of metal shown in Fig 1;

Fig. 3 is a top plan view of the cylindrical blank of metal shown in Fig. 1;

Fig. 4 is a substantially central vertical sectional view of a cylindrical blank shown in Fig. 3;

Fig. 5 is a top plan view of a cylindrical body produced by the method comprising one embodiment of the invention, obtained by processing the cylindrical blank of metal shown in Fig. 1 through the step shown in Figs. 3 and 4;

Fig. 6 is a substantially central vertical sectional view of the cylindrical body shown in Fig. 5;

Fig. 7 is a substantially central vertical sectional view of a cylindrical body produced by the method comprising another embodiment of the invention;

Fig. 8 is a substantially central vertical sectional view of a cylindrical body produced by the method comprising still another embodiment of the invention;

Fig. 9 is a top plan view of a cylindrical body produced by the method comprising a further embodiment of the invention;

Fig. 10 is a sectional view of the cylindrical body shown in Fig. 9, showing the essential portions thereof; and

Fig. 11 is a side view of the cylindrical body shown in Figs. 9 and 10, showing their essential portions.

## DESCRIPTION OF THE PREFERRED EMBODIMENTS

The preferred embodiments of the invention will now be described by referring to the accompanying drawings.

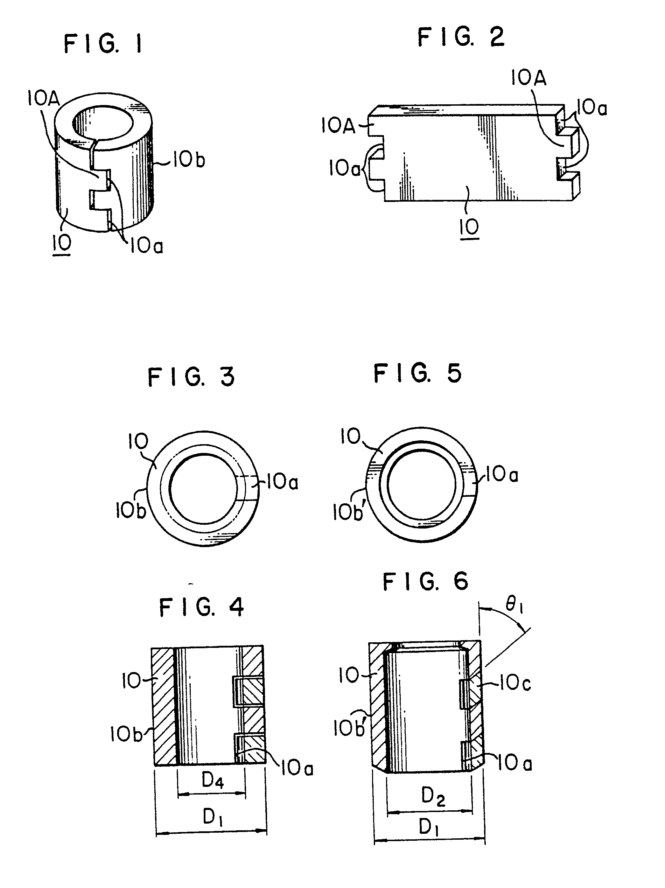

Fig. 1 shows a cylindrical blank 10b formed of a sheet 10 of magnetic material suitable for producing a yoke of a starter motor, for example Fig. 2 is a developed view of the cylindrical blank 10b shown in Fig. 1 as being formed of the sheet 10 of magnetic material, in which the sheet 10 is shown as being formed at opposite sides with projections 10A and cutouts 10a adapted to fit one in the other when the sheet 10 is rolled and the opposite sides are brought into abutting engagement with each other, to provide the cylindrical blank 10b.

The sheet 10 of magnetic material for providing the cylindrical blank 10b of magnetic material is obtained by cutting a strip of steel material into predetermined lengths and subjecting each of the to rolling or other suitable treatment to provide the cylindrical blank 10b by inserting the projections 10A into the cutouts 10a. Figs. 3 and 4 are a top plan view and a substantially central vertical sectional view of the cylindrical blank 10b.

The cylindrical blank 10b thus obtained is restrained by a metal mould which is fitted to the forward end and the entire outer peripheral surface and the inner peripheral surface is pressed by means of a punch of a diameter slightly larger than the inner diameter of the cylindrical blank 10b, to compress the cylindrical blank 10b in the direction of the thickness thereof to cause deformation to occur. Since the cylindrical blank 10b is restrained at the forward end and the entire outer peripheral surface, the inner peripheral surface of the cylindrical blank 10b is stretched axially rearwardly until the thickness of the cylindrical blank 10b is reduced to a predetermined level. Thus, a cylindrical body 10b' of the predetermined dimensions shown in a top plan view in Fig. 5 and in a substantially central vertical sectional view in Fig. 6 is obtained.

When the outer diameter and the inner diameter of the cylindrical body 10b' are designated by $D_1$ and $D_2$ respectively, the inner diameter $D_4$ of the cylindrical blank 10b is made smaller than the inner diameter $D_2$ of the cylindrical body 10b', and the inner peripheral surface of the cylindrical blank 10b is compressed as aforesaid to cause deformation to occur to increase the inner diameter from $D_4$ to $D_2$. As a result, the projections 10A inserted in the cutouts 10a and snugly fit therein are brought into intimate contact with each other at jointed portions 10c. At this time, the inner peripheral surface of the cylindrical blank 10b shifts relative to the punch and is stretched axially. By keeping an angle $\theta_1$ formed by each of the jointed portions 10c and the outer peripheral surface of the cylindrical body 10b' at a level at least below 90 degrees, it is possible to prevent the movement of the jointed portions 10c in a radial direction, so that the projections 10A and cutouts 10a can be kept in intimate contact with each other at the jointed portions 10c to allow the cylindrical body 10b' to keep its integrity by resisting an external force exerted thereon. A flange is formed at the forward end of the cylindrical body 10b' because the presence of the mould makes it impossible to fully compress the inner peripheral surface. However, the flange may be removed by any known method, if so desired.

In the cylindrical body 10b' produced as described hereinabove, the projections 10A and cutouts 10a are kept in intimate contact with each other at the jointed portions 10c. This enables the cylindrical body 10b' to be provided with the same precision finish and rigidity as are provided to a hollow member (seamless pipe) prepared separately. The method according to the invention enables a material to be used which cannot be used for producing the hollow member. For example, when the cylindrical body is intended for use as an outer magnetic frame of a permanent magnet type direct current electric motor, a material of high magnetic characteristics can be used. This is conducive to improved performance of the motor.

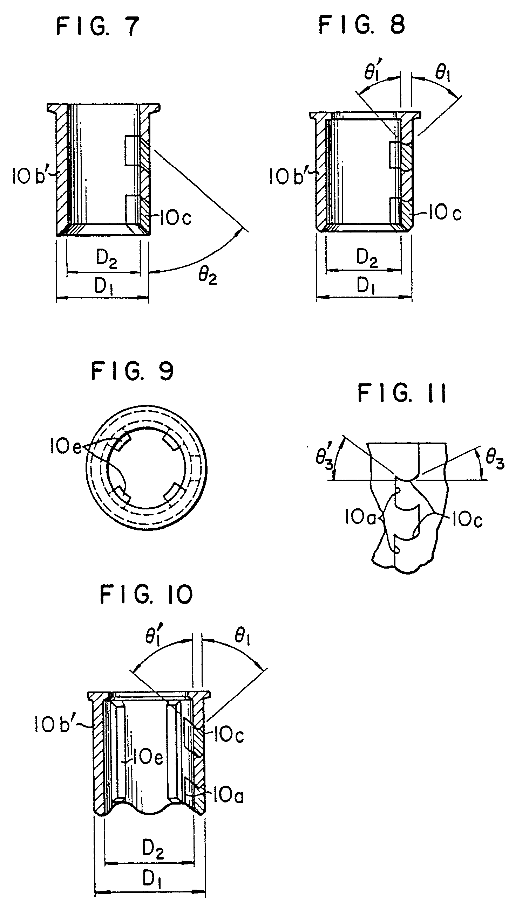

Fig. 7 shows another embodiment of the invention for producing a cylindrical body 10b' of desired dimensions by compressing the cylindrical blank 10b with a metal mold. In the embodiment shown in Fig. 7, the sheet 10 of metal is rolled to obtain a cylindrical blank 10b in which the inner diameter $D_2$ is sized to have a desired value for the inner diameter of the cylindrical body and the outer diameter $D_0$ is greater than a desired value for the outer diameter $D_1$ of the cylindrical body, so that the outer diameter $D_0$ is reduced to the outer diameter $D_1$ by compression. In this embodiment, the forward end and the inner peripheral surface of the cylindrical blank are restrained by a mould and the outer peripheral surface is pressed from an axial direction by means of a cylindrical metal mould, to thereby provide a cylindrical body of the predetermined outer diameter $D_1$. Downward movement of the cylindrical metal mould reduces the thickness of the cylindrical blank and causes the outer peripheral surface to stretch axially rearwardly, to bring the projections inserted in the cutouts into intimate contact with each other at the jointed portions 10c.

Fig. 8 shows still another embodiment of the invention for producing a cylindrical body 10b'. In this embodiment, the cylindrical blank 10b obtained by rolling the sheet 10 is pressed from an axial direction both at the inner peripheral surface and outer peripheral surface with a metal mould. In this case, a central portion of the thickness of the cylindrical blank 10b between the inner peripheral surface and outer peripheral surface is stretched axially rearwardly as the cylindrical blank 10b is compressed, so that the projections inserted in the cutouts are brought into intimate contact with each other at the jointed portions 10c.

Figs. 9 and 10 show a further embodiment of the invention for producing a cylindrical body 10b'. In this embodiment, the sheet 10 of metal is rolled into a cylindrical blank 10b in which the outer diameter $D_0$ is larger than a desired value for the outer diameter $D_1$ of the cylindrical body 10b' and the inner diameter $D_4$ is smaller than a desired value for the inner diameter $D_2$ of the cylindrical body, so that the cylindrical blank 10b is subjected to deformation by compression to obtain the inner diameter $D_2$ and the outer diameter $D_1$ of the desired values while ribs 10e parallel to each other are formed on the inner peripheral surface and extend in an axial direction. The cylindrical body 10b' obtained by the embodiment of the invention shown in Figs. 9 and 10 has particular utility as an outer magnetic frame of a permanent magnet type direct current electric motor. In this application, a magnetic loss between the cylindrical body 10b' serving as an outer magnetic frame and the ribs 10e serving as interpoles does not occur, which improves magnetic characteristics. Also, the jointed portions 10c formed by the projections inserted in the cutouts are deformed, so that the angle $\theta_1'$ formed by each of the jointed portions 10c and the inner peripheral surface of the cylindrical body 10b' and the angle $\theta_1'$ formed by each of the jointed portions 10c and the outer peripheral surface of the cylindrical body 10b' can be kept at least below 90 degrees.

Fig. 11 shows the camber angles $\theta_3$ and $\theta_3'$ in a circumferential direction of the jointed portions 10c as viewed from one side after the cylindrical blank 10b is deformed into the cylindrical body 10b' by compression. In the figure, it will be seen that the camber angles $\theta_1$ and $\theta_1'$ at least exceed 0 degrees, so that the projections inserted in the cutouts are brought into contact with each other at the jointed portions 10c with increased intimacy and the reliability of a joint provided by the jointed portions 10c is improved. By using the cylindrical body 10b' produced by the embodiment shown in Figs. 9 and 10, it is possible to greatly increase the dimensional precision, rigidity and performance of the prior art in which the outer magnetic frame and the interpoles are joined together by welding.

The provision of a plurality of cutouts 10a for inserting the projections 10A facilitates rounding the sheet 10 of metal.

## Claims

1. A method of production of a cylindrical body (10b') comprising the steps of:
preparing a sheet of metal (10) formed at opposite sides thereof with portions (10A, 10a) complementary to each other and adapted to fit one in the other;
rolling said metal sheet (10) and fitting said complementary portions (10A, 10a) one in the other to form a cylindrical blank (10b); characterized by
compressing said cylindrical blank (10b) in a manner to reduce thickness of the cylindrical blank (10b) over an entire periphery of the latter while stretching a portion of the cylindrical blank (10b) in an axial direction of the latter, thereby forming the cylindrical body (10b') having said complementary portions (10c) jointed together in an intimately contacted manner.

2. A method of production of a cylindrical body as claimed in claim 1, characterized in that said compressing step includes the step of pressing and deforming an inner peripheral surface of the cylindrical blank (10b) while restraining an outer peripheral surface of the latter with a metal mould.

3. A method of production of a cylindrical body as claimed in claim 1, characterized in that said compressing step includes the step of pressing and deforming an outer peripheral surface of the cylindrical blank (10b) while restraining an inner peripheral surface of the latter with a metal mould.

4. A method of production of a cylindrical body as claimed in claim 1, characterized in that said compressing step includes the step of pressing and deforming inner and outer peripheral surfaces of the cylindrical blank (10b) simultaneously with metal moulds.

## Patentansprüche

1. Verfahren zur Herstellung eines zylindrischen Körpers (10b') mit folgenden Verfahrensschritten:
Reparieren eines Metallblechs (10) mit an gegenüberliegenden Seiten ausgebildeten komplementären Bereichen (10A, 10a), die so ausgebildet sind, daß sie ineinandergreifen;
Walzen des Metallblechs (10) und Ineinanderfügen der komplementären Bereiche (10A, 10a), um einen Zylinder (10b) zu bilden, gekennzeichnet durch Komprimieren des Zylinders (10b), um dessen Dicke über dessen gesamte Umfangsfläche zu reduzieren, während ein Teil des Zylinders (10b) in Axialrichtung gestreckt wird, wodurch ein Zylinderkórper (10b') gebildet wird, dessen komplementäre Bereiche (10c) in innigem Kontakt miteinander verbunden sind.

2. Verfahren zur Herstellung eines zylinderförmigen Körpers nach Anspruch 1, dadurch gekennzeichnet, daß das Komprimieren ein Pressen und Verformen der inneren Umfangsfläche des Zylinders (10b) umfaßt, während die äußere Umfangsfläche des Zylinders in einer Metallform gehalten wird.

3. Verfahren zur Herstellung eines Zylinderkörpers nach Anspruch 1, dadurch gekennzeichnet, daß das Komprimieren ein Pressen und Verformen der äußeren Umfangsfläche des Zylinders (10b) umfaßt, während die innere Umfangsfläche des Zylinders in einer Metallform gehaltert wird.

4. Verfahren zur Herstellung eines zylinderförmigen Körpers nach Anspruch 1, dadurch gekennzeichnet, daß das Komprimieren ein Pressen und Verformen der inneren und äußeren Umfangsflächen des Zylinders (10b) gleichzeitig mit Metallwalzen umfaßt.

## Revendications

1. Procédé de fabrication d'un corps cylindrique (10b'), incluant les étapes consistant à:
— préparer une feuille de tôle (10) comportant, sur des côtés opposés, des parties (10A, 10a) complémentaires l'une de l'autre et aptes à s'engager l'une dans l'autre;
— enrouler ladite feuille de tôle (10) et introduire lesdites parties complémentaires (10A, 10a) l'une dans l'autre de manière à former une ébauche cylindrique (10b);
caractérisé en ce que l'on soumet à une compression ladite ébauche cylindrique (10b) de manière à réduire l'épaisseur de l'ébauche cylindrique (10b) sur un pourtour entier de cette dernière, tout en étirant une partie de l'ébauche cylindrique (10b) dans une direction axiale de cette dernière, de manière à former ledit corps cylindrique (10b'), dans lequel lesdites parties complémentaires (10c) sont réunies entre elles en étant en contact intime.

2. Procédé de fabrication d'un corps cylindrique selon la revendication 1, caractérisé en ce que ladite étape de compression inclut l'étape consistant à presser et déformer une surface périphérique intérieure de l'ébauche cylindrique (10b), tout en retenant une surface périphérique extérieure de cette dernière à l'aide d'un moul métallique.

3. Procédé de fabrication d'un corps cylindrique selon la revendication 1, caractérisé en ce que ladite étape de compression inclut l'étape consistant à presser et déformer une surface périphérique extérieure de l'ébauche cylindricque (10b), tout en retenant une surface périphérique intérieure de cette dernière à l'aide d'un moule métallique.

4. Procédé de fabrication d'un corps cylindrique selon la revendication 1, caractérisé en ce que ladite étape de compression inclut l'étape consistant à presser et déformer simultanément des surfaces périphériques intérieure et extérieure de l'ébauche cylindrique (10b) avec des moules métalliques.

# FIG. 1

# FIG. 2

# FIG. 3

# FIG. 5

# FIG. 4

# FIG. 6

0 129 246

FIG. 7

FIG. 8

FIG. 9

FIG. 11

FIG. 10

2